(19) Europäisches Patentamt / European Patent Office / Office européen des brevets

(11) **EP 3 221 042 B1**

(12) **FASCICULE DE BREVET EUROPEEN**

(45) Date de publication et mention
de la délivrance du brevet:
**27.03.2019 Bulletin 2019/13**

(51) Int Cl.:
**B01J 13/00** *(2006.01)*

(21) Numéro de dépôt: **15797965.9**

(22) Date de dépôt: **16.11.2015**

(86) Numéro de dépôt international:
**PCT/EP2015/076718**

(87) Numéro de publication internationale:
**WO 2016/079069 (26.05.2016 Gazette 2016/21)**

(54) **PROCÉDÉ DE PRÉPARATION D'UNE SOLUTION COLLOÏDALE DE NANOPARTICULES D'UN OXYDE MIXTE DE VANADIUM ET D'EUROPIUM OU D'UN OXYDE MIXTE DE VANADIUM, D'EUROPIUM ET D'YTTRIUM.**

VERFAHREN ZUR HERSTELLUNG EINER KOLLOIDALEN LÖSUNG AUS NANOPARTIKELN AUS EINEM MISCHOXID VON VANADIUM UND EUROPIUM ODER MISCHOXID VON VANADIUM, EUROPIUM UND YTTRIUM.

METHOD FOR PREPARING A COLLOIDAL SOLUTION OF NANOPARTICLES OF A MIXED OXIDE OF VANADIUM AND EUROPIUM OR A MIXED OXIDE OF VANADIUM, EUROPIUM AND YTTRIUM.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2014 FR 1461067**

(43) Date de publication de la demande:
**27.09.2017 Bulletin 2017/39**

(73) Titulaires:
• **Commissariat à l'Énergie Atomique et aux Énergies Alternatives 75015 Paris (FR)**
• **Centre National de la Recherche Scientifique 75794 Paris Cedex 16 (FR)**

(72) Inventeurs:
• **AMBARD, Chrystel F-37000 Tours (FR)**
• **DUEE, Natacha F-33000 Bordeaux (FR)**
• **VALLE, Karine F-37000 Tours (FR)**
• **PORTEHAULT, David F-94270 Le Kremlin Bicetre (FR)**
• **SANCHEZ, Clément F-91440 Bures Sur Yvette (FR)**

(74) Mandataire: **Brevalex
95, rue d'Amsterdam
75378 Paris Cedex 8 (FR)**

(56) Documents cités:
• **HU JING ET AL: "New synthesis for a group of tetragonal LnVO4and their Luminescent properties", MATERIALS LETTERS, vol. 120, 15 janvier 2014 (2014-01-15), pages 20-22, XP028626885, ISSN: 0167-577X, DOI: 10.1016/J.MATLET.2014.01.020**
• **ZHOU Q ET AL: "An ethanol gas sensor using energy transfer cataluminescence on nanosized YVO4:Eu<3+> surface", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, vol. 144, no. 1, 29 janvier 2010 (2010-01-29), pages 192-197, XP026862016, ISSN: 0925-4005 [extrait le 2009-10-29]**
• **ARNAUD HUIGNARD ET AL: "Synthesis and Luminescence Properties of Colloidal YVO 4 :Eu Phosphors", CHEMISTRY OF MATERIALS, vol. 12, no. 4, 29 mars 2000 (2000-03-29), pages 1090-1094, XP055195412, ISSN: 0897-4756, DOI: 10.1021/cm990722t**

**Description**

**DOMAINE TECHNIQUE**

L'invention se rapporte au domaine de la détection de molécules cibles, et en particulier de peroxydes tels que le peroxyde d'hydrogène, par des capteurs optiques basés sur les propriétés de fluorescence d'un matériau sensible.

Plus spécifiquement, l'invention se rapporte à un procédé de préparation par voie sol-gel d'une solution colloïdale ou « sol » de nanoparticules d'un oxyde mixte de vanadium et d'europium ou d'un oxyde mixte de vanadium, d'europium et d'yttrium, qui, outre d'être simple, rapide et très reproductible, permet d'obtenir des nanoparticules aux propriétés améliorées, notamment en termes de photostabilité (c'est-à-dire la stabilité sous irradiation lumineuse) et de rendement quantique de fluorescence, par rapport à celles que présentent les nanoparticules du même type proposées à ce jour.

L'invention se rapporte également à un procédé de préparation de nanoparticules telles que précédemment définies.

Cette solution colloïdale étant susceptible d'être utilisée, soit telle qu'elle soit sous la forme d'un film mince, comme matériau sensible dans un capteur optique à fluorescence destiné à détecter la présence de molécules cibles dans un milieu gazeux ou liquide, l'invention se rapporte également à un procédé permettant de préparer un film mince à partir de cette solution colloïdale.

L'invention trouve un intérêt tout particulier dans la détection des peroxydes et notamment du peroxyde d'hydrogène.

Le peroxyde d'hydrogène est un composé à partir duquel il est possible de préparer artisanalement des explosifs comme le triperoxyde de triacétone (TATP) ou le triperoxyde d'hexaméthylène diamine (HMDT). Il est aussi un produit de décomposition de ces explosifs. Aussi, l'invention trouve-t-elle notamment application dans la lutte contre le terrorisme.

Les peroxydes étant, par ailleurs, des composés très instables qui se décomposent facilement en libérant, pour un certain nombre d'entre eux, des vapeurs inflammables, l'invention trouve également application dans la surveillance, à des fins sécuritaires, de locaux dans lesquels sont fabriqués, stockés et/ou utilisés des peroxydes ou des composés peroxydables, c'est-à-dire des composés qui, initialement, ne sont pas des peroxydes mais qui sont susceptibles de se transformer au moins partiellement en peroxydes suite à un phénomène d'auto-oxydation, encore appelé peroxydation, ainsi que dans la surveillance de la pollution atmosphérique.

**ÉTAT DE LA TECHNIQUE ANTÉRIEURE**

Pour la détection de peroxydes, et notamment du peroxyde d'hydrogène, sous la forme de vapeurs, il a été proposé dans la demande internationale PCT WO 2013/045646 (ci-après référence **[1])** d'utiliser des films minces obtenus à partir de solutions colloïdales de nanoparticules d'un oxyde mixte de vanadium et d'europium ou d'un oxyde mixte de vanadium, d'europium et d'yttrium, comme matériaux sensibles dans des capteurs optiques à fluorescence.

Ces solutions colloïdales sont obtenues par un procédé sol-gel dans lequel une solution aqueuse d'orthovanadate de sodium est ajoutée à une solution aqueuse de nitrate d'europium ou à une solution aqueuse comprenant à la fois du nitrate d'europium et du nitrate d'yttrium, puis le mélange résultant est laissé sous agitation, pendant 30 minutes à 60°C. Une dialyse contre de l'eau est ensuite réalisée pour éliminer des solutions colloïdales ainsi obtenues les ions en excès présents dans ces solutions.

Il est montré dans la référence **[1]** que des capteurs optiques à fluorescence comprenant des films minces préparés à partir de ces solutions colloïdales comme matériaux sensibles permettent de détecter des vapeurs de peroxyde d'hydrogène avec une bonne sensibilité et une bonne spécificité vis-à-vis de solvants organiques comme l'éthanol, l'acétone et le toluène, et fournissent une réponse rapide et fiable. Il est également montré que ces capteurs ont une bonne tenue au vieillissement et ce, sans qu'il soit nécessaire de prendre de précautions particulières pour les conserver.

Néanmoins, dans la perspective de fournir des capteurs optiques à fluorescence pour la détection de peroxydes qui soient encore plus performants que ceux décrits dans la référence **[1],** les Inventeurs se sont fixé pour but d'améliorer les propriétés des nanoparticules d'oxyde mixte de vanadium et d'europium ou d'oxyde mixte de vanadium, d'europium et d'yttrium décrites dans cette référence, et notamment leur photostabilité - ce qui permet de conférer aux capteurs une durabilité encore plus grande - et leur rendement quantique de fluorescence puisque celui-ci conditionne l'intensité de la fluorescence émise par les capteurs et, donc, l'efficacité de la détection des molécules cibles.

Ils se sont également fixé pour but que l'amélioration des propriétés desdites nanoparticules puisse être obtenue tout en continuant de synthétiser ces nanoparticules par un procédé sol-gel, compte-tenu des nombreux avantages que présente ce type de procédé, et que cette synthèse soit la plus reproductible possible.

**EXPOSÉ DE L'INVENTION**

Ces buts sont atteints par l'invention qui propose, en premier lieu, un procédé de préparation d'une solution colloïdale S2 de nanoparticules d'un oxyde mixte de formule $Y_xEu_{1-x}VO_4$ dans laquelle x est tel que $0 \leq x < 1$, qui comprend :

a) la formation d'une solution colloïdale S1 par réaction, dans un milieu aqueux ou hydro-alcoolique, d'un précurseur P1 d'oxyde de vanadium avec un précurseur P2 d'oxyde d'europium si x = 0, ou bien avec un précurseur P2 d'oxyde d'europium et un précurseur P3 d'oxyde d'yttrium si x ≠ 0, la réaction étant obtenue par ajout fractionné de P2 ou de P2 et de P3 à une solution comprenant P1, ou par ajout fractionné de P1 à une solution comprenant P2 ou P2 et P3, le milieu ayant une valeur initiale de pH, notée $pH_i$ ; et
b) le mûrissement de la solution colloïdale S1 formée à l'étape a), moyennant quoi on obtient la solution colloïdale S2 ; et qui est caractérisé en ce que :

1°) à l'étape a) :

- soit $pH_i$ est égale à une valeur seuil de pH, notée $pH_s$, préalablement choisie et au moins égale à 8, auquel cas on maintient le pH du milieu à $pH_i$ pendant toute la durée de l'étape a) et ce, que $pH_i$ soit diminuée ou augmentée par l'ajout de P2 ou de P2 et de P3 à la solution comprenant P1, ou par l'ajout de P1 à la solution comprenant P2 ou P2 et P3 ;
- soit $pH_i$ est supérieure à $pH_s$ et est diminuée par l'ajout de P2 ou de P2 et de P3 à la solution comprenant P1, ou par l'ajout de P1 à la solution comprenant P2 ou P2 et P3, ou bien $pH_i$ est inférieure à $pH_s$ et est augmentée par l'ajout de P2 ou de P2 et de P3 à la solution comprenant P1, ou par l'ajout de P1 à la solution comprenant P2 ou P2 et P3, auquel cas on laisse le pH du milieu évoluer jusqu'à ce qu'il atteigne $pH_s$, puis on maintient le pH du milieu à $pH_s$ jusqu'à la fin de l'étape a) ;
- soit $pH_i$ est supérieure à $pH_s$ et est augmentée ou inchangée par l'ajout de P2 ou de P2 et de P3 à la solution comprenant P1, ou par l'ajout de P1 à la solution comprenant P2 ou P2 et P3, auquel cas on abaisse le pH du milieu jusqu'à ce qu'il atteigne $pH_s$, puis on maintient le pH du milieu à $pH_s$ jusqu'à la fin de l'étape a) ;
- soit encore $pH_i$ est inférieure à $pH_s$ et est abaissée ou inchangée par l'ajout de P2 ou de P2 et de P3 à la solution comprenant P1, ou par l'ajout de P1 à la solution comprenant P2 ou P2 et P3, auquel cas on augmente le pH du milieu jusqu'à ce qu'il atteigne $pH_s$, puis on maintient le pH du milieu à $pH_s$ jusqu'à la fin de l'étape a) ; et en ce que

2°) l'étape b) comprend le chauffage de la solution colloïdale S1 dans un four à micro-ondes.

Ainsi, selon l'invention, c'est par la combinaison d'une régulation du pH du milieu dans lequel les précurseurs d'oxydes métalliques réagissent les uns avec les autres, et d'un mûrissement par chauffage aux micro-ondes de la solution colloïdale S1 résultant de la réaction de ces précurseurs, que l'on obtient des nanoparticules d'un oxyde mixte de formule $Y_xEu_{1-x}VO_4$ aux propriétés améliorées, notamment en termes de photostabilité et de rendement quantique de fluorescence.
Il est à noter que l'utilisation de micro-ondes dans la préparation de nanoparticules d'un oxyde mixte de vanadium et d'europium a déjà été décrite dans la littérature, par Vanetsev et al. (Doklady Chemistry 2011, 441(1), 325-329, ci-après référence [2]) d'une part, et par Huong et al. (Journal of Rare Earths 2011, 29(12), 1137-1141, ci-après référence [3]) d'autre part. L'utilisation de micro-ondes dans la préparation de nanoparticules d'un oxyde d'europium est déjà décrite par HU Jing et al (Material Letters 2014, 140 20-22).
Toutefois, outre que, dans ces références, le traitement aux micro-ondes intervient sur une solution colloïdale ayant été préalablement soumise à un mûrissement (de 30 minutes à une température non précisée dans la référence [2] et de 120 minutes à 80°C dans la référence [3]) - ce qui n'est pas le cas dans le procédé selon l'invention -, il s'avère que leurs auteurs ne font aucunement état d'une quelconque régulation du pH auquel est réalisée la réaction des précurseurs d'oxydes, tout comme ils ne donnent aucune information sur les éventuels effets d'un traitement aux micro-ondes sur la photostabilité et le rendement quantique de fluorescence des nanoparticules obtenues.
Dans ce qui précède et ce qui suit :

- le terme « nanoparticules » désigne des particules dont les trois dimensions sont à l'échelle nanométrique, c'est-à-dire sont comprises entre 1 nm et 100 nm ;
- le terme « aqueux(se) » caractérise un milieu ou une solution dont le solvant est de l'eau ;
- le terme « alcoolique » caractérise un milieu ou une solution dont le solvant est un alcool ou un mélange d'alcools miscibles à l'eau, typiquement méthanol, éthanol, n-propanol ou isopropanol ; tandis que
- le terme « hydro-alcoolique » caractérise un milieu ou une solution dont le solvant est un mélange d'eau et d'un ou plusieurs alcools miscibles à l'eau, typiquement méthanol, éthanol, *n*-propanol ou isopropanol.

Par ailleurs, dans ce qui précède et ce qui suit, les termes « solution colloïdale » et « sol » sont équivalents et parfaitement interchangeables.

Les expressions « de .... à .... », « allant de .... à .... » et « compris(e) entre .... et .... » sont également équivalentes et entendent signifier que les bornes sont incluses.

Conformément à l'invention, les précurseurs d'oxydes métalliques utilisés à l'étape a) peuvent être :

- des sels tels qu'un orthovanadate de sodium ou un métavanadate de sodium pour le précurseur P1, un nitrate d'europium, un chlorure d'europium, un fluorure d'europium, un sulfate d'europium, un acétate d'europium, un oxalate d'europium ou encore un carbonate d'europium pour le précurseur P2, et un nitrate d'yttrium, un chlorure d'yttrium, un fluorure d'yttrium, un sulfate d'yttrium, un acétate d'yttrium, un oxalate d'yttrium ou encore un carbonate d'yttrium pour le précurseur P3 ;
- des composés organométalliques, c'est-à-dire des composés qui comprennent au moins une liaison covalente entre un atome de carbone et un atome métallique, tels que des alcoxydes métalliques du type éthoxyde, isopropoxyde ou n-butoxyde d'europium pour le précurseur P2, et éthoxyde, isopropoxyde ou n-butoxyde pour le précurseur P3 ; ou encore
- des composés métallo-organiques, c'est-à-dire des composés comprenant des ions métalliques coordonnés à des ligands organiques, tels que ceux connus sous l'acronyme MOFs (de « Metal-Organic Frameworks ») ; des MOFs à base d'europium ou d'yttrium sont notamment décrits par Chen et Ma dans Reviews in Inorganic Chemistry 2012, 32(2-4), 81-100, ci-après référence **[4],** à laquelle le lecteur pourra se référer pour plus d'informations sur ce type de composés.

Dans le cadre de l'invention, les précurseurs d'oxydes métalliques utilisés à l'étape a) sont, de préférence, des sels que l'on utilise avantageusement sous la forme de solutions que l'on ajoute les unes aux autres, ces solutions pouvant être indépendamment les unes des autres aqueuses, alcooliques ou hydro-alcooliques avec, toutefois, la condition que le milieu dans lequel ces précurseurs réagissent soit un milieu aqueux ou hydro-alcoolique. À cet égard, on notera que, lorsque le milieu est hydro-alcoolique, il présente préférentiellement une teneur volumique en alcool(s) qui ne dépasse pas 80 %.

Parmi les sels précédemment mentionnés, on préfère tout particulièrement utiliser un orthovanadate de sodium comme précurseur P1, un nitrate d'europium comme précurseur P2 et un nitrate d'yttrium comme précurseur P3.

Par ailleurs, l'étape a) est, de préférence, réalisée à une température allant de 5 °C à 95 °C et, mieux encore, de 60 °C, sous pression atmosphérique.

Quant au pH seuil, $pH_s$, il est, de préférence, compris entre 8,5 et 10 et, mieux encore, entre 8,8 et 9,2.

Le maintien du pH du milieu à $pH_s$ peut être réalisé par l'addition à ce milieu de toute base organique ou inorganique, telle que l'hydroxyde de tétraméthyl-ammonium ou l'hydroxyde de sodium, dans le cas où l'ajout de P2 ou de P2 et P3 à la solution comprenant P1 ou l'ajout de P1 à la solution de P2 ou de P2 et P3 a pour effet d'abaisser $pH_i$, ou, au contraire, par l'addition audit milieu de tout acide organique ou inorganique, tel que l'acide chlorhydrique ou l'acide acétique, dans le cas où l'ajout de P2 ou de P2 et P3 à la solution comprenant P1 ou l'ajout de P1 à la solution de P2 ou de P2 et P3 a pour effet d'augmenter $pH_i$.

Un dispersant tel qu'un dispersant ionique du type citrate ou silicate de sodium, ou bien un dispersant polymère, qui peut être cationique, anionique ou non ionique en fonction de la valeur choisie pour $pH_s$, tel que la polyvinylpyrrolidone, un polyacrylate du type polyacrylate de sodium, ou un polyol du type Pluronic™ F-127, peut éventuellement être présent dans le milieu afin de limiter la croissance des nanoparticules et/ou de faciliter leur dispersion.

De manière préférée :

- la réaction entre les précurseurs d'oxydes métalliques est obtenue par ajout fractionné d'une solution comprenant P2 ou P2 et P3 à une solution comprenant P1 ;
- $pH_i$ est supérieure à $pH_s$ ; et
- l'ajout de la solution comprenant P2 ou P2 et P3 à la solution comprenant P1 a pour effet d'abaisser $pH_i$ en sorte qu'on laisse le pH du milieu baisser jusqu'à ce qu'il atteigne $pH_s$, puis on maintient le pH du milieu à $pH_s$ jusqu'à la fin de l'étape a).

Ceci est, par exemple, réalisé en introduisant, dans un réacteur, une solution aqueuse comprenant P1, par exemple un orthovanadate de sodium, de pH préférentiellement compris entre 12,3 et 13. Puis, on ajoute à cette solution, par exemple goutte à goutte, une solution aqueuse comprenant P2, par exemple un nitrate d'europium, ou bien une solution aqueuse comprenant à la fois P2 et P3, par exemple un nitrate d'europium et un nitrate d'yttrium, tout en mesurant de façon continue le pH du milieu présent dans le réacteur au moyen d'un appareil de titrage pH-métrique.

Cet ajout s'accompagnant d'une chute du pH du milieu présent dans le réacteur (la valeur initiale de pH, $pH_i$, de ce milieu correspondant à la valeur de pH que présente la solution aqueuse du précurseur P1 avant que ne lui soit ajoutée la solution comprenant P2 ou P2 et P3), on laisse ce pH chuter jusqu'à ce qu'il atteigne la valeur seuil de pH, $pH_s$, que l'on a préalablement choisie et qui est, par exemple, comprise entre 8,8 et 9,2. Une fois $pH_s$ atteinte, on maintient alors le pH du milieu présent dans le réacteur, par addition de quantités appropriées d'une base, à $pH_s$ jusqu'à ce que toute la solution aqueuse comprenant P2 ou P2 et P3 ait été introduite dans le réacteur.

Conformément à l'invention, l'étape b) est, de préférence, réalisée à une température de 100°C à 300°C et, mieux encore, de 150°C à 200°C, et sous une pression allant de 1 bar à 85 bar et, mieux encore, de 4,7 bar à 15,5 bar, auquel cas sa durée est avantageusement comprise entre 1 minute et 60 minutes et, mieux encore, entre 10 minutes et 20 minutes.

De préférence, le procédé comprend de plus une purification de la solution colloïdale S2 (c'est-à-dire l'élimination de tous les ions et molécules en excès présents dans cette solution), que l'on réalise avantageusement par dialyse, au moyen d'une membrane semi-perméable.

Selon l'usage auquel la solution colloïdale S2 est destinée, la purification peut également servir à remplacer tout ou partie du solvant de cette solution par un autre solvant.

Ainsi, dans le cas notamment où la solution colloïdale S2 est une solution aqueuse, la purification peut servir à remplacer tout ou partie de l'eau de cette solution par un solvant organique, lequel peut, par exemple, être choisi parmi les alcools tels que le méthanol, l'éthanol, le n-propanol ou l'isopropanol, l'acétonitrile, le tétrahydrofurane (THF), le toluène et les mélanges de ceux-ci.

En variante, la purification de la solution colloïdale S2 et le remplacement de tout ou partie du solvant de cette solution peuvent être réalisées successivement, auquel cas la purification de la solution colloïdale S2 peut, par exemple, être réalisée par une dialyse contre de l'eau tandis que le remplacement de tout ou partie du solvant peut, par exemple, être réalisé par une autre dialyse contre le solvant de remplacement ou bien par concentration de la solution colloïdale S2 suivie d'une dilution du concentrât obtenu par le solvant de remplacement.

Le procédé peut comprendre en outre, si nécessaire, un ajustement de la teneur en nanoparticules de la solution colloïdale S2, soit par dilution soit par évaporation d'une partie du solvant présent dans cette solution.

Dans tous les cas, une solution colloïdale stable de nanoparticules d'un oxyde mixte de formule $Y_xEu_{1-x}VO_4$, dont les dimensions sont typiquement comprises entre 2 nm et 50 nm, est obtenue.

De préférence, les nanoparticules sont des nanoparticules d'un oxyde mixte de formule $Y_xEu_{1-x}VO_4$ dans laquelle x est égal ou inférieur à 0,5 et, plus particulièrement, des nanoparticules de $VO_4Eu$ (auquel cas x est égal à 0) ou bien de $Y_{0,5}Eu_{0,5}VO_4$ (auquel cas x est égal à 0,5).

L'invention a également pour objet un procédé de préparation de nanoparticules d'un oxyde mixte de formule $Y_xEu_{1-x}VO_4$ dans laquelle x est tel que $0 \leq x < 1$, qui comprend la séparation des nanoparticules d'une solution colloïdale S2 telle qu'obtenue par le procédé décrit ci-avant, du solvant de cette solution colloïdale. Cette séparation peut être effectuée par toute méthode permettant de séparer des nano-objets en suspension dans un solvant de ce solvant telle que la nano-filtration, l'évaporation du solvant, etc.

Comme précédemment indiqué, la solution colloïdale S2, telle qu'obtenue par le procédé qui vient d'être décrit, est susceptible d'être utilisée, soit telle qu'elle soit sous la forme d'un film mince, comme matériau sensible dans un capteur optique à fluorescence destiné à détecter la présence de molécules cibles dans un milieu gazeux ou liquide.

Aussi, l'invention a-t-elle en outre pour objet un procédé de préparation d'un film mince de nanoparticules d'un oxyde mixte de formule $Y_xEu_{1-x}VO_4$ dans laquelle x est tel que $0 \leq x < 1$, qui comprend :

- le dépôt sur un substrat d'au moins une couche d'une solution colloïdale S2 telle qu'obtenue par le procédé décrit ci-avant, cette solution ayant, de préférence, une teneur massique en nanoparticules allant de 0,1 % à 10 % et, mieux encore, de 2 % à 4 % ; et
- le séchage de cette (ces) couche(s).

Le dépôt de la (des) couche(s) de la solution colloïdale S2 sur le substrat peut être réalisé par l'une quelconque des techniques classiquement utilisées pour déposer un sol sur un substrat comme, par exemple la pulvérisation (ou « spray-coating » en anglais), l'enduction centrifuge (ou « spin-coating » en anglais), le dépôt à la goutte (ou « drop-coating » en anglais), le trempage-retrait (ou « dip-coating » en anglais), l'enduction laminaire (ou « meniscus-coating » en anglais), l'enduction au rouleau (ou « roll-to-roll process » en anglais), l'enduction au pinceau (ou « painting-coating » en langue anglaise), l'épandage (ou « soak-coating » en anglais), le jet d'encre (ou « inkjet printing » en anglais) ou encore le dépôt de gouttes (ou « drop casting » en anglais).

Parmi ces techniques, on préfère le trempage-retrait et l'enduction centrifuge car ils permettent d'obtenir des films minces d'épaisseur homogène.

Quelle que soit la technique de dépôt utilisée, le séchage de la (des) couche(s) de la solution colloïdale S2 déposée(s) sur le substrat peut être réalisé naturellement à l'air libre ou peut être facilité, par exemple, par application d'un flux gazeux, par chauffage thermique ou radiatif, ou par des moyens mécaniques tels que la rotation du substrat comme lors d'un dépôt par enduction centrifuge.

Le film mince ainsi obtenu présente préférentiellement une épaisseur de 2 nm à 10 $\mu$m et, mieux encore, de 2 nm à 1 $\mu$m.

Une solution colloïdale S2 ou un film mince tel(le) qu'obtenu(e) comme décrit ci-avant peut être utilisé(e) comme matériau sensible dans un capteur optique à fluorescence destiné à détecter la présence d'au moins une molécule cible dans un milieu gazeux ou liquide.

L'utilisation d'une solution colloïdale S2 comme matériau sensible dans un capteur optique à fluorescence peut être réalisée en mettant directement cette solution au contact du milieu gazeux ou liquide dans lequel est (sont) susceptible(s) de se trouver la (les) molécule(s) cible(s) que l'on cherche à détecter. Si ce milieu est un milieu gazeux, cette mise en contact peut, par exemple, être réalisée en vaporisant la solution colloïdale S2 dans un dispositif dans lequel circule le milieu gazeux, ou bien en plaçant la solution colloïdale S2 dans un récipient et en faisant barboter le milieu gazeux dans cette solution. Si ce milieu est un milieu liquide, la mise en contact peut, par exemple, être réalisée par ajout direct du milieu liquide dans la solution colloïdale. Dans tous les cas, la solution colloïdale S2 présente, de préférence, une teneur massique en particules de 0,001 % à 4 % et, mieux encore, de 0,02 % à 0,03 %.

L'utilisation d'un film mince comme matériau sensible dans un capteur optique à fluorescence peut, elle, être réalisée comme bien connu dans l'état de la technique.

À cet égard, le lecteur est invité à se référer à l'ouvrage Molecular Fluorescence: Principles and Applications de B. Valeur, publié par Ed. WILEY VCH, New York en 2002 **[5],** et qui décrit le principe de fonctionnement des capteurs optiques à fluorescence.

La (les) molécule(s) cible(s) susceptible(s) d'être détectée(s) par le capteur est (sont), de préférence, un (des) peroxyde(s).

À titre d'exemples de peroxydes susceptibles d'être détectés par un capteur optique à fluorescence tel que précédemment décrit, on peut citer le peroxyde d'hydrogène, les hydroperoxydes comme, par exemple, l'hydroperoxyde de t-butyle, l'hydroperoxyde d'$\alpha$-cumyle ou l'hydroperoxyde de 1-phénéthyle, et les peroxydes de cétones comme, par exemple, le peroxyde de méthyléthylcétone, le peroxyde d'acétylacétone ou le peroxyde de cyclohexanone, le peroxyde d'hydrogène étant particulièrement préféré.

Par ailleurs, la présence de la (des) molécule(s) cible(s) est, de préférence, détectée dans un milieu gazeux.

Outre de fournir des nanoparticules de formule $Y_xEu_{1-x}VO_4$ dont la photostabilité et le rendement quantique de fluorescence sont plus élevés que ceux des nanoparticules de même formule décrites dans la référence [1], ce qui permet d'augmenter la durabilité d'une part, et l'efficacité de détection d'autre part, des capteurs optiques à fluorescence utilisant un sol ou un film mince constitué par ces nanoparticules comme matériau sensible, l'invention présente les avantages suivants :

- une amélioration des caractéristiques structurelles des nanoparticules (meilleure cristallinité, diminution des défauts de structure, etc) ;
- une amélioration de la stabilité de la suspension de nanoparticules et, partant, une amélioration de la qualité des films minces obtenus à partir de sols comprenant ces nanoparticules (diffusion plus faible, capacité d'absorption plus élevée, meilleure organisation des films, surface accessible aux molécules cibles accrue, etc) ;
- une amélioration de la reproductibilité des caractéristiques des nanoparticules d'une synthèse à l'autre et, partant, des caractéristiques des solutions colloïdales comprenant ces nanoparticules ainsi que celles des films minces obtenus à partir de ces solutions colloïdales ;
- un gain de temps important dans la synthèse des nanoparticules, l'utilisation d'un four à micro-ondes pour réaliser l'étape de mûrissement permettant, en effet, de raccourcir considérablement le temps nécessaire pour réaliser ce mûrissement.

D'autres caractéristiques et avantages de l'invention apparaîtront mieux à la lecture du complément de description qui suit.

Bien entendu, ces exemples ne sont donnés qu'à titre d'illustrations de l'objet de l'invention et ne constituent en aucun cas une limitation de cet objet.

## BRÈVE DESCRIPTION DES FIGURES

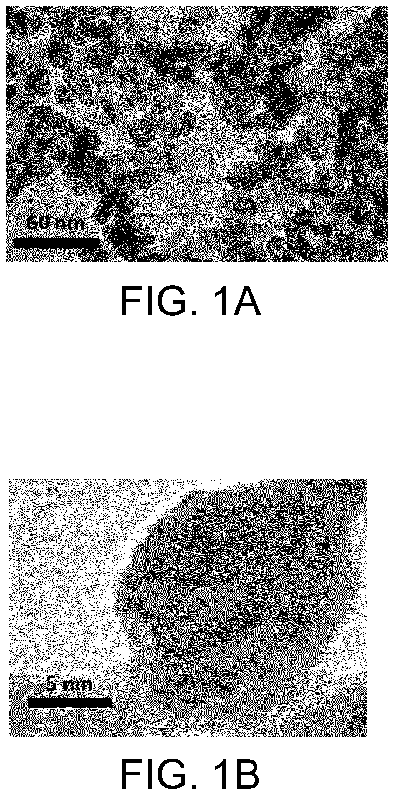

Les figures 1A et 1B correspondent à deux images de nanoparticules de $EuVO_4$ d'un sol préparé par le procédé de l'invention, prises au microscope électronique en transmission, à des grandissements respectivement de 67 000 x et de 265 000 x.

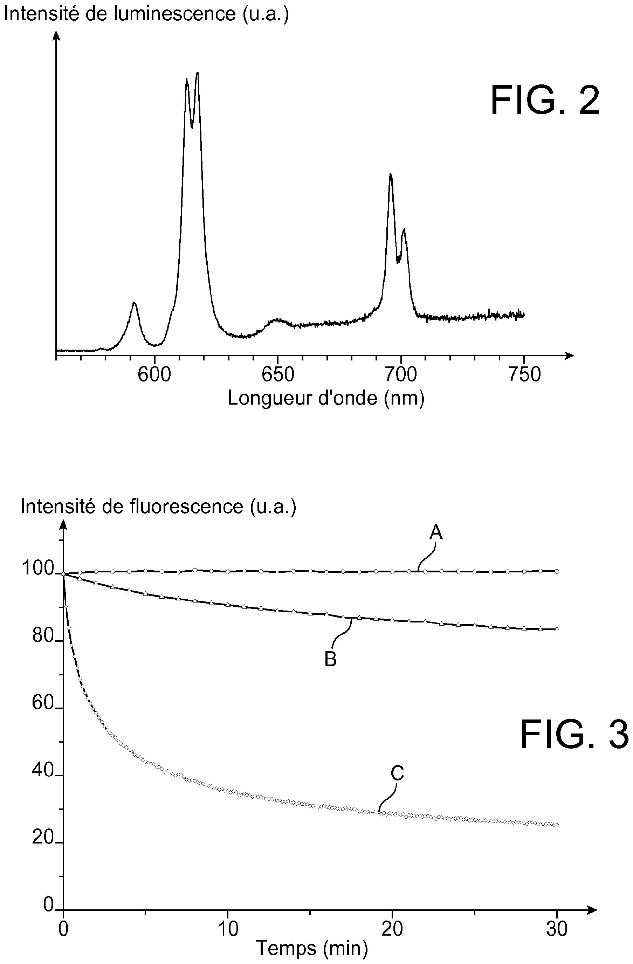

La figure 2 illustre le spectre d'émission de fluorescence des nanoparticules de $EuVO_4$ montrées sur les figures 1A et 1B, sous excitation à la longueur d'onde de 270 nm.

La figure 3 illustre l'évolution en fonction du temps, exprimé en minutes, de l'intensité de la fluorescence, exprimée en unités arbitraires, émise à la longueur d'onde de 617 nm sous irradiation UV ($\lambda_{excitation}$ : 270 nm) par trois films minces de nanoparticules de $Y_{0,5}Eu_{0,5}VO_4$ ; sur cette figure, la courbe A correspond à un film mince obtenu à partir d'un sol préparé par le procédé de l'invention ; la courbe B correspond à un film mince obtenu à partir d'un sol préparé par un procédé ne comprenant pas d'étape de mûrissement sous micro-ondes tandis que la courbe C correspond à un film mince obtenu à partir d'un sol préparé par un procédé analogue à celui décrit dans la référence **[1].**

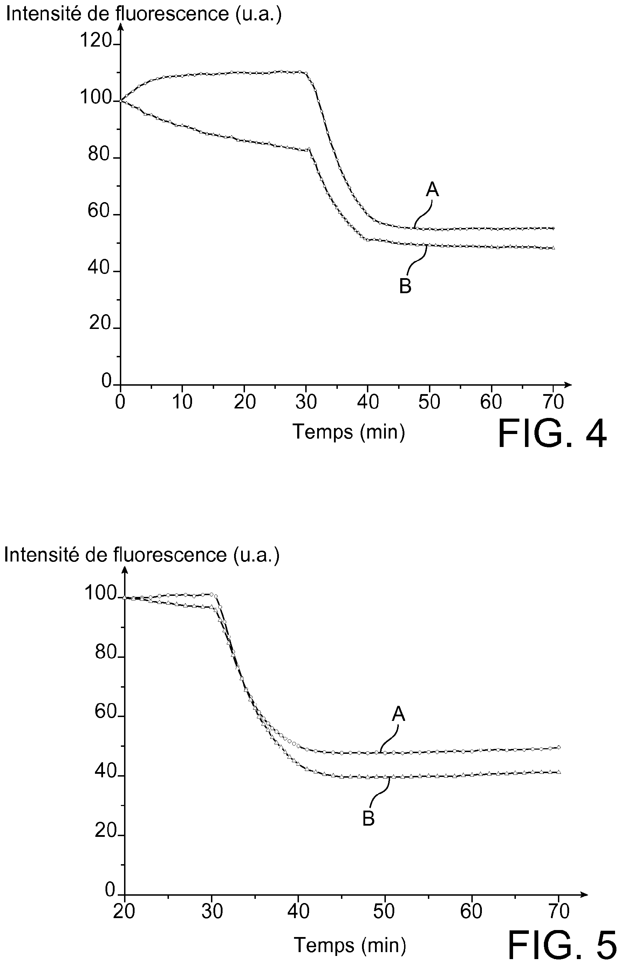

La figure 4 illustre l'évolution dans le temps, exprimé en minutes, de l'intensité de la fluorescence, exprimée en unités arbitraires, émise à la longueur d'onde de 617 nm par deux films minces de nanoparticules de $EuVO_4$ lorsque ces films sont exposés à l'air ambiant puis à des vapeurs de peroxyde d'hydrogène, d'une concentration de 1 ppm ; sur cette figure, la courbe A correspond à un film mince obtenu à partir d'un sol préparé par le procédé de l'invention tandis que la courbe B correspond à un film mince obtenu à partir d'un sol préparé par un procédé ne comprenant pas d'étape de mûrissement sous micro-ondes.

La figure 5 illustre l'évolution dans le temps, exprimé en minutes, de l'intensité de la fluorescence, exprimée en unités arbitraires, émise à la longueur d'onde de 617 nm par deux films minces de nanoparticules de $Y_{0,5}Eu_{0,5}VO_4$ lorsque ces films sont exposés à l'air ambiant puis à des vapeurs de peroxyde d'hydrogène, d'une concentration de 1 ppm pour un film mince obtenu à partir d'un sol préparé par le procédé de l'invention (courbe A), et d'une concentration de 5 ppm pour un film mince obtenu à partir d'un sol préparé par un procédé ne comprenant pas d'étape de mûrissement sous micro-ondes (courbe B).

## EXPOSÉ DÉTAILLÉ DE MODES DE RÉALISATION PARTICULIERS

**EXEMPLE 1** : **Préparation de sols de nanoparticules de $EuVO_4$ et de $Y_{0,5}Eu_{0,5}VO_4$**

1.1- Préparation sans régulation du pH ni mûrissement sous micro-ondes

Dans cet exemple, on prépare deux sols aqueux, dénommés respectivement ci-après « sol 1 » et « sol 2 », de nanoparticules de $EuVO_4$ dans le cas du sol 1 et de nanoparticules de $Y_{0,5}Eu_{0,5}VO_4$ dans le cas du sol 2, en suivant un protocole opératoire analogue à celui décrit dans la référence **[1].**

Pour ce faire, on prépare tout d'abord des solutions aqueuses contenant les précurseurs d'oxydes, à savoir une solution aqueuse d'orthovanadate de sodium ($Na_3VO_4$) de pH compris entre 12,3 et 13, une solution aqueuse de nitrate d'europium ($Eu(NO_3)_3$) et, pour le sol 2, une solution aqueuse de nitrate d'yttrium ($Y(NO_3)_3$).

Ces solutions sont respectivement obtenues par dissolution de $Na_3VO_4$, de $Eu(NO_3)_3 \cdot 5H_2O$ et de $Y(NO_3)_3 \cdot 6H_2O$ dans de l'eau déionisée.

La solution d'orthovanadate de sodium est introduite dans un ballon bicol chauffé à 60°C, qui contient un barreau aimanté et est surmonté d'un réfrigérant et d'une ampoule d'addition.

Pour la préparation du sol 1, la solution de nitrate d'europium est placée dans l'ampoule d'addition et ajoutée goutte à goutte à la solution d'orthovanadate de sodium, sous agitation magnétique.

Pour la préparation du sol 2, les solutions de nitrate d'europium et de nitrate d'yttrium sont mélangées et c'est le mélange résultant qui est placé dans l'ampoule d'addition et ajouté goutte à goutte à la solution d'orthovanadate de sodium, également sous agitation magnétique.

Dans les deux cas, le contenu du ballon est ensuite laissé à mûrir sous agitation magnétique, pendant 30 minutes à 60°C.

Il se forme ainsi un sol dont on ramène la température à l'ambiante et que l'on soumet à une opération de dialyse (au moyen d'une membrane semi-perméable) contre de l'eau déionisée pendant 3 jours, en changeant l'eau deux fois par jour, afin d'éliminer les ions en excès présents dans ce sol.

Les volumes et les concentrations des solutions utilisées sont les suivants :

- sol 1 : 42,9 mL de solution d'orthovanadate de sodium à 0,1 mol/L et 57,1 mL de solution de nitrate d'europium à 0,1 mol/L ;
- sol 2 : 42,9 mL de solution d'orthovanadate de sodium à 0,1 mol/L, 28,6 mL de solution de nitrate d'europium 0,1 mol/L et 28,6 mL de solution de nitrate d'yttrium à 0,1 mol/L.

Les sols 1 et 2 ainsi obtenus présentent une teneur massique en nanoparticules de 1 à 2,3 %.

1.2 - Préparation avec régulation du pH mais sans mûrissement sous micro-ondes

Dans cet exemple, on prépare deux sols aqueux, dénommés respectivement ci-après « sol 3 » et « sol 4 », de nanoparticules de $EuVO_4$ dans le cas du sol 3 et de nanoparticules de $Y_{0,5}Eu_{0,5}VO_4$ dans le cas du sol 4.

Pour ce faire, on procède comme au point 1.1 ci-avant pour la préparation des sols 1 et 2, à la différence près que la solution d'orthovanadate de sodium est introduite dans un ballon tricol qui, outre d'être surmonté d'un réfrigérant et d'une ampoule d'addition, est relié (*via* le troisième col) à un appareil de titrage pH-métrique, lui-même relié à un bécher contenant de l'hydroxyde de tétraméthyl-ammonium (TMAOH), permettant de mesurer le pH du contenu du ballon pendant toute l'opération d'addition de la solution de nitrate d'europium (dans le cas de la préparation du sol 3) ou du mélange des solutions de nitrate d'europium et de nitrate d'yttrium (dans le cas de la préparation du sol 4) et d'ajouter au contenu du ballon la quantité de TMAOH strictement nécessaire pour ramener le pH du contenu du ballon à une valeur seuil de pH, $pH_s$, préalablement choisie dès que ce pH descend au-dessous de cette valeur seuil.

En effet, l'addition goutte à goutte de la solution de nitrate d'europium ou du mélange des solutions de nitrate d'europium et de nitrate d'yttrium à la solution d'orthovanadate de sodium s'accompagne d'une chute du pH du contenu du ballon (la valeur initiale de pH, $pH_i$, de ce contenu correspondant au pH de la solution d'orthovanadate de sodium et se situant donc entre 12,3 et 13) qu'on laisse se produire jusqu'à ce que ce pH atteigne $pH_s$, qui est égale à 9 dans le présent exemple, et on maintient ensuite le pH du contenu du ballon à cette valeur, par ajout de TMAOH, jusqu'à la fin de ladite opération d'addition.

Les sols 3 et 4 ainsi obtenus présentent une teneur massique en nanoparticules de 1 à 2,3 %.

1-3 - Préparation par le procédé de l'invention (régulation du pH + mûrissement sous micro-ondes)

Dans cet exemple, on prépare deux sols aqueux, dénommés respectivement ci-après « sol 5 » et « sol 6 », de nanoparticules de $EuVO_4$ dans le cas du sol 5 et de nanoparticules de $Y_{0,5}Eu_{0,5}VO_4$ dans le cas du sol 6, en procédant comme décrit au point 1.2 ci-avant pour la préparation des sols 3 et 4, à la différence près qu'à l'issue de l'opération d'addition de la solution de nitrate d'europium (dans le cas de la préparation du sol 5) ou du mélange des solutions de nitrate d'europium et de nitrate d'yttrium (dans le cas de la préparation du sol 6), le contenu du ballon est mis à mûrir pendant 15 minutes dans un four à micro-ondes (Anton Parr GmbH - Synthos 3000 multimode) à 150°C, sous une pression de 4,7 bar environ et sous agitation magnétique.

Les sols 5 et 6 ainsi obtenus présentent une teneur massique en nanoparticules de 1 à 2,3 %.

La nature des nanoparticules et les conditions de préparation des sols 1 à 6 sont résumées dans le tableau ci-après :

| Sol | Nanoparticules | Régulation du pH | Mûrissement sous-micro-on d es |
|---|---|---|---|
| 1 | $EuVO_4$ | - | - |
| 2 | $Y_{0,5}Eu_{0,5}VO_4$ | - | - |
| 3 | $EuVO_4$ | + | - |
| 4 | $Y_{0,5}Eu_{0,5}VO_4$ | + | - |
| 5 | $EuVO_4$ | + | + |
| 6 | $Y_{0,5}Eu_{0,5}VO_4$ | + | + |

À titre d'exemple, la microstructure, vue au microscope électronique en transmission, des nanoparticules de $EuVO_4$ présentes dans le sol 5 est montrée sur les figures 1A et 1B, tandis que le spectre d'émission de fluorescence de ces nanoparticules, sous excitation à la longueur d'onde de 270 nm, est montré sur la figure 2.

Ce spectre met en évidence un pic d'émission de fluorescence à 617 nm, qui est commun à toutes les particules d'$Y_xEu_{1-x}VO_4$ dans lesquelles x est inférieur à 1.

**EXEMPLE 2** : **Préparation de films minces de nanoparticules de $EuVO_4$ et de $Y_{0,5}Eu_{0,5}VO_4$**

Dans cet exemple, on prépare des films minces à partir des sols 1 à 6 sur des lames de verre.

Pour ce faire, il est préférable de remplacer préalablement une partie de l'eau présente dans ces sols par un solvant organique, de préférence volatil.

Dans le cas présent, l'eau des sols est partiellement remplacée par de l'éthanol par dialyse des sols contre ce solvant pendant 24 heures.

Les films minces sont ensuite formés par trempage-retrait (vitesse : 15 cm/min) des lames de verre dans les sols hydro-éthanoliques ainsi obtenus, suivi d'un séchage à l'air libre de 3 minutes pour éliminer l'eau et l'éthanol de la couche de sol ainsi formée sur les lames de verre.

**EXEMPLE 3** : **Photostabilité des nanoparticules de Y$_{0,5}$Eu$_{0,5}$VO$_4$ sous irradiation UV**

L'évolution en fonction du temps de l'intensité de la fluorescence émise à la longueur d'onde de 617 nm par les films minces préparés à partir des sols 4 et 6 sous irradiation UV ($\lambda_{excitation}$ : 270 nm) est mesurée au moyen d'un spectrofluorimètre (Horiba Jobin Yvon - Fluoromax™-P) que l'on utilise en mode cinétique.

Les résultats obtenus sont illustrés sur la figure 3 dans laquelle la courbe A correspondant au film mince préparé à partir du sol 6, la courbe B correspondant au film mince préparé à partir du sol 4 et la courbe C correspondant au film mince préparé à partir du sol 2.

Comme le montre cette figure, l'intensité de la fluorescence émise par le film mince préparé à partir du sol 4 chute d'environ 16 % sur une période de 30 minutes alors que l'intensité de la fluorescence émise par le film mince préparé à partir du sol 6 reste constante sur cette même période.

La photostabilité des nanoparticules synthétisées comme décrit au point 1.3 de l'exemple 1 ci-avant est donc bien meilleure que celle des nanoparticules synthétisées comme décrit au point 1.2 de ce même exemple et ceci est dû au mûrissement sous micro-ondes.

L'apport de la régulation du pH lors de la synthèse des nanoparticules est également important puisque l'intensité de la fluorescence émise par le film mince préparé à partir du sol 2 chute de 75 % dans les mêmes conditions expérimentales.

C'est donc la combinaison entre la régulation du pH et le mûrissement sous micro-ondes qui permet de conférer aux nanoparticules une photostabilité remarquable.

**EXEMPLE 4** : **Détection de vapeurs de peroxyde d'hydrogène par fluorescence**

Dans cet exemple, on teste l'aptitude des films minces préparés à partir des sols 3 et 5 à détecter des vapeurs de peroxyde d'hydrogène par fluorescence au moyen d'un spectrofluorimètre (Horiba Jobin Yvon - Fluoromax™-P) que l'on utilise en mode cinétique.

Pour ce faire, on place les lames de verre dont les deux faces sont recouvertes par ces films minces dans le porte-échantillon du spectrofluorimètre. On démarre la mesure de cinétique en exposant les films minces à l'air ambiant pendant 30 minutes afin d'établir une ligne de base, puis on expose les films minces à des vapeurs de peroxyde d'hydrogène (que l'on introduit directement dans la cellule de mesure du spectrofluorimètre), d'une concentration de 1 ppm, pendant 10 minutes tout en poursuivant la mesure de cinétique.

La longueur d'onde d'excitation de la fluorescence utilisée est de 270 nm tandis que la longueur d'onde de mesure est de 617 nm.

Comme le montre la figure 4, qui représente l'évolution dans le temps (en minutes) de l'intensité de la fluorescence (en unités arbitraires) émise par chacun des films minces testés, l'interaction entre les nanoparticules de EuVO$_4$ et le peroxyde d'hydrogène provoque une diminution importante de l'intensité de fluorescence émise par ces films mais cette diminution est plus marquée pour le film mince préparé à partir du sol 5 (courbe A) que pour le film mince préparé à partir du sol 3 (courbe B).

Le mûrissement sous micro-ondes améliore donc les performances de détection des nanoparticules de EuVO$_4$.

On refait le même test que celui qui vient d'être décrit mais en exposant les films minces préparés à partir des sols 4 et 6 à l'air ambiant pendant 30 minutes puis à des vapeurs de peroxyde d'hydrogène, de concentration de 5 ppm pour le film mince préparé à partir du sol 4 et de 1 ppm pour le film mince préparé à partir du sol 6, et ce pendant 10 minutes.

Comme le montre la figure 5, qui représente l'évolution dans le temps (en minutes) de l'intensité de la fluorescence (en unités arbitraires) émise par chacun des films minces testés, la diminution de l'intensité de la fluorescence émise par le film mince préparé à partir du sol 6 suite à son exposition aux vapeurs de peroxyde d'hydrogène est de 50 % (courbe A) mais la diminution de l'intensité de la fluorescence émise par le film mince préparé à partir du sol 4 suite à son exposition aux vapeurs de peroxyde d'hydrogène est également de 50 % (courbe B).

Ainsi, la détection des vapeurs de peroxyde d'hydrogène est de même importance pour les deux films minces alors que la concentration en peroxyde d'hydrogène à laquelle sont exposés ces films est 5 fois plus faible dans le cas du film mince obtenu à partir du sol 6.

Ces résultats confirment que le mûrissement sous micro-ondes améliore nettement les performances de détection des nanoparticules de Y$_x$Eu$_{1-x}$VO$_4$.

Des tests complémentaires sont réalisés pour apprécier la limite de détection de vapeurs d'hydrogène par un film mince obtenu à partir du sol 6. Ces tests montrent que cette limite est de 0,1 ppm.

**EXEMPLE 5 : Rendement quantique de fluorescence des nanoparticules d'EuVO$_4$**

Les rendements quantiques de fluorescence des nanoparticules d'EuVO$_4$ des sols 1, 3 et 5 sont déterminés par comparaison avec un composé standard, en l'espèce la rhodamine 6G, au moyen de l'équation (I) ci-après :

$$Q = Q_R \left(\frac{m}{m_R}\right)\left(\frac{n^2}{n_R^2}\right)$$

dans laquelle :

Q et Q$_R$ sont respectivement les rendements quantiques des nanoparticules et de la rhodamine 6G (en l'espèce, Q$_R$ = 0,95)
m et m$_R$ sont respectivement les pentes des droites obtenues à partir du tracé des intégrales des intensités de la fluorescence émise par les nanoparticules et la rhodamine 6G en fonction de leur absorbance à la longueur d'onde $\lambda$ d'excitation (ici, $\lambda_{exc}$ = 280 nm)
n et n$_R$ sont respectivement les indices de réfraction des solvants dans lesquels se trouvent les nanoparticules et la rhodamine 6G (ici, n = n$_R$ = indice de réfraction de l'éthanol, c'est-à-dire 1,3594 à 25°C).

Pour ce faire, on prépare une série de sols éthanoliques, de différentes concentrations en nanoparticules d'EuVO$_4$, en procédant à un transfert des nanoparticules présentes dans les sols 1, 3 et 5 vers de l'éthanol et en diluant les sols éthanoliques ainsi obtenus avec de l'éthanol. On prépare parallèlement des solutions éthanoliques de rhodamine 6G, de différentes concentrations en rhodamine 6G. On acquiert les spectres d'absorbance et d'émission de fluorescence de ces solutions et on calcule les intégrales des intensités de la fluorescence émise par les nanoparticules et la rhodamine 6G. On détermine les pentes des droites obtenues à partir du tracé de ces intégrales, ce qui permet d'appliquer l'équation (I) ci-avant et de connaître la valeur de Q.

Le rendement quantique de fluorescence ainsi déterminé pour les nanoparticules de EuVO$_4$ du sol 1 est de 3,2 $\pm$ 0,1 % ; celui des nanoparticules du sol 3 est de 3,0 $\pm$ 0,1 % tandis que celui des nanoparticules du sol 5 est de 7,8 $\pm$ 0,1 %.

Ceci montre que le mûrissement sous micro-ondes augmente considérablement le rendement quantique de fluorescence des nanoparticules de Y$_x$Eu$_{1-x}$VO$_4$.

## RÉFÉRENCES CITÉES

**[1]** Demande internationale PCT WO 2013/045646
**[2]** Vanetsev et al., Doklady Chemistry 2011, 441(1), 325-329
**[3]** Huong et al., Journal of Rare Earths 2011, 29(12), 1137-1141
**[4]** Chen et Ma, Reviews in Inorganic Chemistry 2012, 32(2-4), 81-100
**[5]** B. Valeur, Molecular Fluorescence: Principles and Applications 2002, Ed. WILEY VCH, New York

**Revendications**

1. Procédé de préparation d'une solution colloïdale S2 de nanoparticules d'un oxyde mixte de formule Y$_x$Eu$_{1-x}$VO$_4$ dans laquelle x est tel que $0 \leq x < 1$, comprenant :

a) la formation d'une solution colloïdale S1 par réaction, dans un milieu aqueux ou hydro-alcoolique, d'un précurseur P1 d'oxyde de vanadium avec un précurseur P2 d'oxyde d'europium si x = 0, ou bien avec un précurseur P2 d'oxyde d'europium et un précurseur P3 d'oxyde d'yttrium si x $\neq$ 0, la réaction étant obtenue par ajout fractionné de P2 ou de P2 et de P3 à une solution comprenant P1, ou par ajout fractionné de P1 à une solution comprenant P2 ou P2 et P3, le milieu ayant une valeur initiale de pH, notée pH$_i$ ; et
b) le mûrissement de la solution colloïdale S1 formée à l'étape a), moyennant quoi on obtient la solution colloïdale S2 ;

**caractérisé en ce que** :

1°) à l'étape a) :

- soit pH$_i$ est égale à une valeur seuil de pH, notée pH$_s$, préalablement choisie et au moins égale à 8, auquel cas on maintient le pH du milieu à pH$_i$ pendant toute la durée de l'étape a) ;
- soit pH$_i$ est supérieure à pH$_s$ et est diminuée par l'ajout de P2 ou de P2 et de P3 à la solution comprenant P1, ou par l'ajout de P1 à la solution comprenant P2 ou P2 et P3, ou bien pH$_i$ est inférieure à pH$_s$ et est augmentée par l'ajout de P2 ou de P2 et de P3 à la solution comprenant P1, ou par l'ajout de P1 à la solution comprenant P2 ou P2 et P3, auquel cas on laisse le pH du milieu évoluer jusqu'à ce qu'il atteigne pH$_s$, puis on maintient le pH du milieu à pH$_s$ jusqu'à la fin de l'étape a) ;
- soit pH$_i$ est supérieure à pH$_s$ et est augmentée ou inchangée par l'ajout de P2 ou de P2 et de P3 à la solution comprenant P1, ou par l'ajout de P1 à la solution comprenant P2 ou P2 et P3, auquel cas on abaisse le pH du milieu jusqu'à ce qu'il atteigne pH$_s$, puis on maintient le pH du milieu à pH$_s$ jusqu'à la fin de l'étape a) ;
- soit encore pH$_i$ est inférieure à pH$_s$ et est abaissée ou inchangée par l'ajout de P2 ou de P2 et de P3 à la solution comprenant P1, ou par l'ajout de P1 à la solution comprenant P2 ou P2 et P3, auquel cas on augmente le pH du milieu jusqu'à ce qu'il atteigne pH$_s$, puis on maintient le pH du milieu à pH$_s$ jusqu'à la fin de l'étape a) ; et **en ce que**

2°) l'étape b) comprend le chauffage de la solution colloïdale S1 dans un four à micro-ondes.

2. Procédé selon la revendication 1, **caractérisé en ce que** les précurseurs d'oxydes métalliques sont des sels, des composés organométalliques ou des composés métallo-organiques et, de préférence, des sels que l'on utilise sous la forme de solutions aqueuses, alcooliques ou hydro-alcooliques.

3. Procédé selon la revendication 2, **caractérisé en ce que** P1 est choisi parmi les orthovanadates et métavanadates de sodium, P2 est choisi parmi les nitrates, les chlorures, les fluorures, les sulfates, les acétates, les oxalates et les carbonates d'europium, tandis que P3 est choisi parmi les nitrates, les chlorures, les fluorures, les sulfates, les acétates, les oxalates et les carbonates d'yttrium.

4. Procédé selon l'une quelconque des revendications 1 à 3, **caractérisé en ce que** la formation de la solution colloïdale S1 est réalisée à une température de 5 °C à 95 °C.

5. Procédé selon l'une quelconque des revendications 1 à 4, **caractérisé en ce que** pH$_s$ est comprise entre 8,5 et 10.

6. Procédé selon l'une quelconque des revendications 1 à 5, **caractérisé en ce que** :

- la réaction entre les précurseurs d'oxydes métalliques est obtenue par ajout fractionné d'une solution comprenant P2 ou P2 et P3 à une solution comprenant P1 ;
- pH$_i$ est supérieure à pH$_s$ ; et
- l'ajout de la solution comprenant P2 ou P2 et P3 à la solution comprenant P1 a pour effet d'abaisser pH$_i$ en sorte qu'on laisse le pH du milieu baisser jusqu'à ce qu'il atteigne pH$_s$, puis on maintient le pH du milieu à pH$_s$ jusqu'à la fin de l'étape a).

7. Procédé selon la revendication 6, **caractérisé en ce que** :

- P1 est un orthovanadate de sodium, P2 est un nitrate d'europium tandis que P3 est un nitrate d'yttrium ;
- la solution comprenant P1 et la solution comprenant P2 ou P2 et P3 sont des solutions aqueuses ; et
- pH$_i$ est comprise entre 12,3 et 13 tandis que pH$_s$ est comprise entre 8,8 et 9,2.

8. Procédé selon l'une quelconque des revendications 1 à 7, **caractérisé en ce que** le chauffage de la solution colloïdale S1 est réalisé à une température de 100 °C à 300 °C et à une pression de 1 bar à 85 bar.

9. Procédé selon l'une quelconque des revendications 1 à 8, **caractérisé en ce que** le chauffage de la solution colloïdale S1 est réalisé pendant 1 minute à 60 minutes.

10. Procédé selon l'une quelconque des revendications 1 à 9, **caractérisé en ce qu'**il comprend de plus une purification de la solution colloïdale S2.

**11.** Procédé selon l'une quelconque des revendications 1 à 10, **caractérisé en ce qu'**il comprend de plus le remplacement de tout ou partie du solvant de la solution colloïdale S2 par un autre solvant.

**12.** Procédé selon l'une quelconque des revendications 1 à 11, **caractérisé en ce que** les nanoparticules sont des nanoparticules d'un oxyde mixte de formule $Y_xEu_{1-x}VO_4$ dans laquelle x est $\leq 0{,}5$.

**13.** Procédé selon la revendication 12, **caractérisé en ce que** les nanoparticules sont des nanoparticules de $EuVO_4$ ou de $Y_{0,5}Eu_{0,5}VO_4$.

**14.** Procédé de préparation de nanoparticules d'un oxyde mixte de formule $Y_xEu_{1-x}VO_4$ dans laquelle x est tel que $0 \leq x < 1$, **caractérisé en ce qu'**il comprend :

- la préparation d'une solution colloïdale S2 de nanoparticules d'un oxyde mixte de formule $Y_xEu_{1-x}VO_4$ dans laquelle x est tel que $0 \leq x < 1$ par un procédé selon l'une quelconque des revendications 1 à 13 ; et
- la séparation des nanoparticules de la solution colloïdale S2 du solvant de la solution colloïdale S2.

**15.** Procédé de préparation d'un film mince de nanoparticules d'un oxyde mixte de formule $Y_xEu_{1-x}VO_4$ dans laquelle x est tel que $0 \leq x < 1$, **caractérisé en ce qu'**il comprend :

- la préparation d'une solution colloïdale S2 de nanoparticules d'un oxyde mixte de formule $Y_xEu_{1-x}VO_4$ dans laquelle x est tel que $0 \leq x < 1$ par un procédé selon l'une quelconque des revendications 1 à 13 ;
- le dépôt sur un substrat d'au moins une couche de la solution colloïdale S2 ; et
- le séchage de cette (ces) couche(s).

**Patentansprüche**

**1.** Verfahren zur Herstellung einer kolloidalen Lösung S2 von Nanopartikeln eines Mischoxids der Formel $Y_xEu_{1-x}VO_4$, wobei x derart ist, dass $0 \leq x < 1$, umfassend Folgendes:

a) Bilden einer kolloidalen Lösung S1 durch Reaktion, in einer wässrigen oder hydroalkoholischen Umgebung, eines Präkursors P1 von Vanadiumoxid mit einem Präkursor P2 von Europiumoxid, wenn x=0, oder aber mit einem Präkursor P2 von Europiumoxid und einem Präkursor P3 von Yttriumoxid, wenn x≠0, wobei die Reaktion erhalten wird durch fraktionierte Zugabe von P2 oder von P2 und von P3 zu einer Lösung, die P1 umfasst, oder durch fraktionierte Zugane von P1 zu einer Lösung, die P2 oder P2 und P3 umfasst, wobei die Umgebung einen anfänglichen pH-Wert hat, genannt $pH_i$; und
b) Reifen der kolloidalen Lösung S1, die im Schritt a) gebildet ist, wodurch man die kolloidale Lösung S2 erhält;

**dadurch gekennzeichnet, dass**:

1°) im Schritt a):

- entweder $pH_i$ gleich einem pH-Schwellenwert ist, genannt $pH_s$, der zuvor gewählt und wenigstens gleich 8 ist, in welchem Fall man den pH der Umgebung während der gesamten Dauer des Schritts a) bei $pH_i$ hält;
- oder $pH_i$ größer ist als $pH_s$ und verringert wird durch die Zugabe von P2 oder von P2 und von P3 zu der Lösung, die P1 umfasst, oder durch die Zugabe von P1 zu der Lösung, die P2 oder P2 und P3 umfasst, oder aber $pH_i$ kleiner als $pH_s$ ist und vergrößert wird durch die Zugabe von P2 oder von P2 und von P3 zu der Lösung, die P1 umfasst, oder durch die Zugabe von P1 zu der Lösung, die P2 oder P2 und P3 umfasst, in welchem Fall man den pH der Umgebung sich entwickeln lässt, bis er $pH_s$ erreicht, und man dann den pH der Umgebung bis zum Ende des Schritts a) bei $pH_s$ hält;
- oder $pH_i$ größer als $pH_s$ ist und vergrößert wird oder unverändert bleibt durch die Zugabe von P2 oder von P2 und von P3 zu der Lösung, die P1 umfasst, oder durch die Zugabe von P1 zu der Lösung, die P2 oder P2 und P3 umfasst, in welchem Fall man den pH der Umgebung verringert, bis er $pH_s$ erreicht, und man dann den pH der Umgebung bis zum Ende des Schritts a) bei $pH_s$ hält;
- oder aber $pH_i$ kleiner als $pH_s$ ist und verringert wird oder unverändert bleibt durch die Zugabe von P2 oder von P2 und von P3 zu der Lösung, die P1 umfasst, oder durch die Zugabe von P1 zu der Lösung, die P2 oder P2 und P3 umfasst, in welchem Fall man den pH der Umgebung erhöht, bis er $pH_s$ erreicht, und man dann den pH der Umgebung bis zum Ende des Schritts a) bei $pH_s$ hält; und dass

2°) der Schritt b) das Heizen der kolloidalen Lösung S1 in einem Mikrowellenofen umfasst.

2. Verfahren nach Anspruch 1, **dadurch gekennzeichnet, dass** die Präkursoren von Metalloxiden Salze, organometallische Verbindungen oder metallorganische Verbindungen sind, und vorzugsweise Salze, die man in der Form von wässrigen, alkoholischen oder hydroalkoholischen Lösungen verwendet.

3. Verfahren nach Anspruch 2, **dadurch gekennzeichnet, dass** P1 ausgewählt ist aus den Orthovanadaten und den Metavanadaten von Natrium, P2 ausgewählt ist aus den Nitraten, den Chloriden, den Fluoriden, den Sulfaten, den Acetaten, den Oxalaten und den Carbonaten von Europium, wohingegen P3 ausgewählt ist aus den Nitraten, den Chloriden, den Fluoriden, den Sulfaten, den Acetaten, den Oxalaten und den Carbonaten von Yttrium.

4. Verfahren nach einem der Ansprüche 1 bis 3, **dadurch gekennzeichnet, dass** die Bildung der kolloidalen Lösung S1 bei einer Temperatur von 5°C bis 95°C realisiert wird.

5. Verfahren nach einem der Ansprüche 1 bis 4, **dadurch gekennzeichnet, dass** $pH_s$ zwischen 8,5 und 10 enthalten ist.

6. Verfahren nach einem der Ansprüche 1 bis 5, **dadurch gekennzeichnet, dass**:

- die Reaktion zwischen den Präkursoren von Metalloxiden erhalten wird durch fraktionierte Zugabe einer Lösung, die P2 oder P2 und P3 umfasst, zu einer Lösung, die P1 umfasst;
- $pH_i$ größer ist als $pH_s$; und
- die Zugabe der Lösung, die P2 oder P2 und P3 umfasst, zu der Lösung, die P1 umfasst, den Effekt hat, $pH_i$ derart abzusenken, dass man den pH der Umgebung sich verringern lässt, bis er $pH_s$ erreicht, und man dann den pH der Umgebung bis zum Ende des Schritts a) bei $pH_s$ hält.

7. Verfahren nach Anspruch 6, **dadurch gekennzeichnet, dass**:

- P1 ein Orthovanadat von Natrium ist, P2 ein Nitrat von Europium ist, wohingegen P3 ein Nitrat von Yttrium ist;
- die Lösung, die P1 umfasst, und die Lösung, die P2 oder P2 und P3 umfasst, wässrige Lösungen sind; und
- $pH_i$ zwischen 12,3 und 13 enthalten ist, wohingegen $pH_s$ zwischen 8,8 und 9,2 enthalten ist.

8. Verfahren nach einem der Ansprüche 1 bis 7, dfadurch gekennzeichnet, dass das Heizen der kolloidalen Lösung S1 bei einer Temperatur von 100°C bis 300°C und bei einem Druck von 1 bar bis 85 bar realisiert wird.

9. Verfahren nach einem der Ansprüche 1 bis 8, **dadurch gekennzeichnet, dass** das Heizen der kolloidalen Lösung S1 während 1 Minute bis 60 Minuten realisiert wird.

10. Verfahren nach einem der Ansprüche 1 bis 9, **dadurch gekennzeichnet, dass** es ferner eine Reinigung der kolloidalen Lösung S2 umfasst.

11. Verfahren nach einem der Ansprüche 1 bis 10, **dadurch gekennzeichnet, dass** es ferner ein vollständiges oder partielles Ersetzen des Lösungsmittel der kolloidalen Lösung S2 durch ein anderes Lösungsmittel umfasst.

12. Verfahren nach einem der Ansprüche 1 bis 11, **dadurch gekennzeichnet, dass** die Nanopartikel Nanopartikel eines Mischoxids der Formel $Y_xEu_{1-x}VO_4$ sind, wobei $x \leq 0,5$ ist.

13. Verfahren nach Anspruch 12, **dadurch gekennzeichnet, dass** die Nanopartikel Nanopartikel von $EuVO_4$ oder von $Y_{0,5}Eu_{0,5}VO_4$ sind.

14. Verfahren zur Herstellung von Nanopartikeln eines Mischoxids der Formel $Y_xEu_{1-x}VO_4$, wobei x derart ist, dass $0 \leq x < 1$, **dadurch gekennzeichnet, dass** es Folgendes umfasst:

- die Herstellung einer kolloidalen Lösung S2 von Nanopartikeln eines Mischoxids der Formel $Y_xEu_{1-x}VO_4$, wobei x derart ist, dass $0 \leq x < 1$, durch ein Verfahren nach einem der Ansprüche 1 bis 13; und
- die Separation der Nanopartikel der kolloidalen Lösung S2 von dem Lösungsmittel der kolloidalen Lösung S2.

15. Verfahren zur Herstellung eines dünnen Films von Nanopartikeln eines Mischoxids der Formel $Y_xEu_{1-x}VO_4$, wobei x derart ist, dass $0 \leq x < 1$, **dadurch gekennzeichnet, dass** es Folgendes umfasst:

- die Herstellung einer kolloidalen Lösung S2 von Nanopartikeln eines Mischoxids der Formel $Y_xEu_{1-x}VO_4$, wobei x derart ist, dass $0 \leq x < 1$, durch ein Verfahren nach einem der Ansprüche 1 bis 13;
- das Aufbringen wenigstens einer Schicht der kolloidalen Lösung S2 auf ein Substrat; und
- das Trocknen dieser Schicht(en).

## Claims

1. Method for preparing a colloidal solution S2 of nanoparticles of a mixed oxide of formula $Y_xEu_{1-x}VO_4$ wherein x is such that $0 \leq x < 1$, comprising:

    a) the formation of a colloidal solution S1 by reaction, in an aqueous or hydro-alcoholic medium, or a precursor P1 of vanadium oxide with a precursor P2 of europium oxide if x = 0, or else with a precursor P2 of europium oxide and a precursor P3 of yttrium oxide if $x \neq 0$, the reaction being obtained by fractionated addition of P2 or of P2 and P3 to a solution comprising P1, or by fractionated addition of P1 to a solution comprising P2 or P2 and P3, the medium having an initial pH value, noted $pH_i$; and
    b) the ripening of the colloidal solution S1 formed in step a), whereby the colloidal solution S2 is obtained;

    **characterized in that**:

    1°) in step a):

        - either $pH_i$ is equal to a threshold pH value, noted $pH_s$, selected beforehand and at least equal to 8, in which case the pH of the medium is maintained to $pH_i$ for the whole duration of step a);
        - or $pH_i$ is greater than $pH_s$ and is reduced by adding P2 or P2 and P3 to the solution comprising P1, or by adding P1 to the solution comprising P2 or P2 and P3, or else $pH_i$ is less than $pH_s$ and is increased by adding P2 or P2 and P3 to the solution comprising P1, or by adding P1 to the solution comprising P2 or P2 and P3, in which case the pH of the medium is left to change until it attains $pH_s$, and then the pH of the medium is maintained at $pH_s$ until the end of step a);
        - or $pH_i$ is greater than $pH_s$ and is increased or unchanged by adding P2 or P2 and P3 to the solution comprising P1, or by adding P1 to the solution comprising P2 or P2 and P3, in which case the pH of the medium is lowered until it attains $pH_s$, and then the pH of the medium is maintained at $pH_s$ until the end of step a);
        - or further $pH_i$ is smaller than $pH_s$ and is lowered or unchanged by adding P2 or P2 and P3 to the solution comprising P1, or by adding P1 to the solution comprising P2 or P2 and P3, in which case the pH of the medium is increased until it attains $pH_s$ and then the pH of the medium is maintained at $pH_s$ until the end of step a); and **in that**

    2°) step b) comprises the heating of the colloidal solution S1 in a microwave oven.

2. Method according to claim 1, **characterized in that** the precursors of metal oxides are salts, organometal compounds or metal-organic compounds and, preferably, salts which are used in the form of aqueous, alcoholic or hydro-alcoholic solutions.

3. Method according to claim 2, **characterized in that** P1 is selected from sodium orthovanadates and metavanadates, P2 is selected from europium nitrates, chlorides, fluorides, sulfates, acetates, oxalates and carbonates, while P3 is selected from yttrium nitrates, chlorides, fluorides, sulfates, acetates, oxalates and carbonates.

4. Method according to any of claims 1 to 3, **characterized in that** the formation of the colloidal solution S1 is achieved at a temperature from 5°C to 95°C.

5. Method according to any of claims 1 to 4, **characterized in that** $pH_s$ is comprised between 8.5 and 10.

6. Method according to any of claims 1 to 5, **characterized in that**:

    - the reaction between the precursors of metal oxides is obtained by fractionated adding of a solution comprising P2 or P2 and P3 to a solution comprising PI;
    - $pH_i$ is greater than $pH_s$; and

- the addition of the solution comprising P2 or P2 and P3 to the solution comprising P1 has the effect of lowering $pH_i$ so that the pH of the medium is let to decrease until it attains $pH_s$ and then the pH of the medium is maintained at $pH_s$ until the end of step a).

7. Method according to claim 6, **characterized in that**:

   - P1 is a sodium orthovanadate, P2 is a europium nitrate while P3 is an yttrium nitrate;
   - the solution comprising P1 and the solution comprising P2 or P2 and P3 are aqueous solutions; and
   - $pH_i$ is comprised between 12.3 and 13 while $pH_s$ is comprised between 8.8 and 9.2.

8. Method according to any of claims 1 to 7, **characterized in that** the heating of the colloidal solution S1 is achieved at a temperature from 100°C to 300°C and at a pressure from 1 bar to 85 bar.

9. Method according to any of claims 1 to 8, **characterized in that** the heating of the colloidal solution S1 is achieved for 1 minute to 60 minutes.

10. Method according to any of claims 1 to 9, **characterized in that** it further comprises a purification of the colloidal solution S2.

11. Method according to any of claims 1 to 10, **characterized in that** it further comprises the replacement of all or part of the solvent of the colloidal solution S2 with another solvent.

12. Method according to claims 1 to 11, **characterized in that** the nanoparticles are nanoparticles of a mixed oxide of formula $Y_xEu_{1-x}VO_4$ wherein x is $\leq 0.5$.

13. Method according to claim 12, **characterized in that** the nanoparticles are nanoparticles of $EuVO_4$ or of $Y_{0.5}Eu_{0.5}VO_4$.

14. Method for preparing nanoparticles of a mixed oxide of formula $Y_xEu_{1-x}VO_4$ wherein x is such that $0 \leq x < 1$, **characterized in that** it comprises:

   - the preparation of a colloidal solution S2 of nanoparticles of a mixed oxide of formula $Y_xEu_{1-x}VO_4$ wherein x is such that $0 \leq x < 1$ by a method according to any of claims 1 to 13; and
   - the separation of the nanoparticles of the colloidal solution S2 from the solvent of the colloidal solution S2.

15. Method for preparing a thin film of nanoparticles of a mixed oxide of formula $Y_xEu_{1-x}VO_4$ wherein x is such that $0 \leq x < 1$, **characterized in that** it comprises:

   - the preparation of a colloidal solution S2 of nanoparticles of a mixed oxide of formula $Y_xEu_{1-x}VO_4$ wherein x is such that $0 \leq x < 1$ by a method according to any of claims 1 to 13;
   - the deposition on a substrate of at least one layer of the colloidal solution S2; and
   - the drying of this (these) layer(s).

FIG. 1A

FIG. 1B

Intensité de luminescence (u.a.)

FIG. 2

Longueur d'onde (nm)

Intensité de fluorescence (u.a.)

FIG. 3

Temps (min)

FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013045646 A

**Littérature non-brevet citée dans la description**

- **VANETSEV et al.** *Doklady Chemistry,* 2011, vol. 441 (1), 325-329
- **HUONG et al.** *Journal of Rare Earths,* 2011, vol. 29 (12), 1137-1141
- **HU JING et al.** *Material Letters,* 2014, vol. 140, 20-22
- **CHEN ; MA.** *Reviews in Inorganic Chemistry,* 2012, vol. 32 (2-4), 81-100
- **B. VALEUR.** Molecular Fluorescence: Principles and Applications. WILEY VCH, 2002